# EUROPÄISCHE PATENTSCHRIFT

(11) **EP 3 918 296 B1**
(45) Veröffentlichungstag und Bekanntmachung des Hinweises auf die Patenterteilung: **15.05.2024**
(21) Anmeldenummer: 19702079.5
(22) Anmeldetag: 28.01.2019
(51) Int. Cl.: G01M 3/28

(54) **VERFAHREN ZUM DETEKTIEREN EINER LECKAGE IN EINEM LEITUNGSSYSTEM UND STEUERSYSTEM ZUR DURCHFÜHRUNG DES VERFAHRENS**
METHOD FOR DETECTING A LEAK IN A LINE SYSTEM AND CONTROL SYSTEM FOR CARRYING OUT THE METHOD
PROCÉDÉ DE DÉTECTION D'UNE FUITE DANS UN SYSTÈME DE CONDUIT ET SYSTÈME DE COMMANDE SERVANT À METTRE EN OEUVRE LE PROCÉDÉ

(43) Veröffentlichungstag der Anmeldung: 08.12.2021
(73) Patentinhaber: Viega Technology GmbH & Co. KG, 57439 Attendorn (DE)
(72) Erfinder: ORBIST, Roland, 7412 Scharans (CH)
(74) Vertreter: Troesch Scheidegger Werner AG
(86) Internationale Anmeldenummer: PCT/EP2019/051959
(87) Internationale Veröffentlichungsnummer: WO 2020/156628

(56) Entgegenhaltungen:
- DE-A1-102010 050 505
- GB-A- 2 553 833
- US-A1- 2016 263 413

## Beschreibung

### TECHNISCHES GEBIET

Die vorliegende Erfindung betrifft ein Verfahren zum Detektieren einer Leckage in einem Leitungssystem, sowie ein Steuersystem zur Durchführung des Verfahrens. Es sollen Wasserschäden durch die Erfindung vermieden werden. Insbesondere dadurch, dass der Ort der Leckage ermittelbar ist.

### STAND DER TECHNIK

In Gebäuden ist regelmäßig eine Vielzahl von Wasserleitungen verlegt, die von einer Flüssigkeitsquelle, wie zum Beispiel einem öffentlichen Wasserversorgungsnetz, zu unterschiedlichen Verbrauchern, wie zum Beispiel Sanitärarmaturen, Spülmaschinen oder Waschmaschinen, führen. An diesen Flüssigkeitsleitungen können Leckagen beispielsweise in Form von Rohrbrüchen oder Rissen entstehen, durch die Flüssigkeit austreten kann. Die austretende Flüssigkeit kann an den Austrittsstellen zu großen Schäden an dem Gebäude, einem Mauerwerk und/oder an Einrichtungen des Gebäudes führen.

Aus diesem Grund ist bereits eine Vielzahl von Verfahren zum Detektieren von Leckagen an Flüssigkeitsleitungen bekannt. Beispielsweise sind mittels Durchflusssensoren Leckagen mit großen Flüssigkeitsaustritten, wie diese zum Beispiel bei Rohrbrüchen auftreten, detektierbar. Die dabei verwendeten Durchflusssensoren benötigen einen sehr großen Messbereich von bis zu 100 l/min (Liter pro Minute). Dies hat zur Folge, dass die Durchflusssensoren zur Bestimmung von geringen Flüssigkeitsaustritten, insbesondere von unter 0,7 l/min, wie diese zum Beispiel bei Tropfleckagen auftreten, nicht geeignet sind. Solche Tropfleckagen können daher lange unentdeckt bleiben, sodass die austretende Flüssigkeit beträchtliche Schäden beispielsweise durch Schimmelbildung verursachen kann.

Zum Detektieren von Tropfleckagen sind daher Verfahren bekannt, bei denen ein durch Tropfleckagen verursachter Druckabfall in den Flüssigkeitsleitungen über eine längere Dauer gemessen wird. Bei diesen Messverfahren müssen die Flüssigkeitsleitungen beispielsweise mit einem Ventil über eine längere Dauer (z.B. 15 Minuten) geschlossen werden, damit während dieser Zeit der Verlauf eines Drucks in den Flüssigkeitsleitungen gemessen werden kann. Wird während der Messung des Druckabfalls ein Verbraucher der Flüssigkeit in dem Gebäude aktiviert, müssen die Flüssigkeitsleitungen unverzüglich wieder geöffnet werden, damit eine Flüssigkeitsversorgung der Verbraucher verzögerungsfrei möglich ist. Dies führt somit zu einem Abbruch des Messverfahrens, sodass dieses zu einem späteren Zeitpunkt wiederholt werden muss. Weiterhin hat dies zur Folge, dass mit diesen Verfahren Leckagen mit Flüssigkeitsaustritten in einem bestimmten Bereich, insbesondere 0,3 l/h bis 0,7 l/min, nicht detektierbar sind, weil Tropfleckagen mit Flüssigkeitsaustritten in diesem Bereich nicht von (geringen) Flüssigkeitsentnahmen durch Verbraucher unterschieden werden können. Das bedeutet, dass eine Leckage mit Flüssigkeitsaustritten in dem Bereich stets zu einem Abbruch des Messverfahrens führt. Somit sind die bekannten Verfahren nur zur Detektion von Tropfleckagen mit Flüssigkeitsaustritten im Bereich von bis zu 0,3 l/h geeignet.

Die EP 3 401 659 offenbart ein Verfahren zum Detektieren einer Leckage in einer Flüssigkeitsleitung, mit welchem Tropfleckagen in einem grösseren Bereich detektierbar sind, wobei auch mit diesem Verfahren lediglich feststellbar ist, dass eine Leckage vorliegt. Die Leckage kann demnach irgendwo in der Flüssigkeitsleitung vorliegen. Nach der Durchführung eines solchen Verfahrens, muss die gesamte Länge der Flüssigkeitsleitung nach der Leckage abgesucht werden. Dies ist zeitaufwändig und verursacht Wartungskosten.

Die DE 10 2010 050 505 offenbart ein System zur Dichteprüfung von trockenen Rohrleitungssystemen in Brandbekämpfungsanlagen, bei welchem mittels eines Drucksensors festgestellt werden kann, ob das gesamte Rohrleitungssystem eine Leckage aufweist.

Die US 2016/0263413 offenbart ein Gasleitungssystem, welches in mehrere Abschnitte unterteilt ist, wobei jeder Abschnitt mit einem eigenen Drucksensor versehen ist, mit welchem eine Leckage in diesem Bereich feststellbar ist.

Die GB 2553833 offenbart ein mobiles Gerät zur Überprüfung eines Löschwasserleitungssystems, welches an einen Hydranten angeschlossen werden kann, um in einem an den Hydranten angrenzenden Abschnitt des Leitungssystems eine Leckage festzustellen.

### BESCHREIBUNG DER ERFINDUNG

Eine Aufgabe der vorliegenden Erfindung besteht darin, ein Verfahren zum Detektieren einer Leckage in einem Leitungssystem, sowie ein Steuersystem zur Durchführung des Verfahrens bereitzustellen, welche eine Allokation der Leckage erlauben.

Diese Aufgabe wird durch Verfahren mit den Merkmalen der Ansprüche 1 und 13 und einem Steuersystem nach Anspruch gelöst. Weitere Ausführungsformen der Verfahren, sowie des Steuersystems zur Durchführung der Verfahren sind durch die Merkmale von weiteren Ansprüchen definiert.

Ein erfindungsgemässes Verfahren zum Detektieren einer Leckage in einem Leitungssystem weist die Merkmale des Anspruchs 1 auf.

Durch das Schliessen des mindestens einen zweiten Ventils steht das Leitungssystem, d.h. vom ersten Ventil bis zum mindestens einen Verbraucher, unter einem bestimmten Druck. Dieser Druck ist mit dem Drucksensor ermittelbar. Der ermittelte Druck entspricht demjenigen in der Verteilleitung, wenn nur eine Entnahmestelle im Verbraucher vorgesehen ist und entspricht dem Druck des gesamten Systems, wenn mehrere Verbraucher und/oder mehrere Entnahmestellen in einem Verbraucher vorgesehen sind, wenn alle zweiten Ventile geöffnet sind. Wenn beim Verbraucher keine Wasserentnahme erfolgt und wenn im System keine Leckage vorhanden ist, so bleibt dieser Druck über eine längere Zeit konstant oder nimmt nur geringfügig ab.

Beispielsweise bei einem Druckabfall von weniger als 0.1 bar über eine Dauer von 10 Minuten, kann davon ausgegangen werden, dass keine Leckage vorhanden ist. Ganz allgemein kann ein erster Schwellenwert für ein System festgelegt werden, unter welchem das System als leckagefrei gilt und es kann ein zweiter Schwellenwert festgelegt werden, über welchem das System als leckagebehaftet gilt. Der erste Schwellenwert und der zweite Schwellenwert können eine Bandbreite von beispielsweise 0 bar bis 0.5 bar umfassen oder die beiden Schwellenwerte können identisch sein und eine scharfe Grenze bilden. Da in einem realen Leitungssystem mit einem minimalen Druckabfall gerechnet werden muss, liegt eine reale Bandbreite der Schwellenwerte zwischen 0.1 bar und 0.5 bar. Die Schwellenwerte können von System zu System unterschiedlich sein und beispielsweise von den Leitungslängen oder der Anzahl Verbraucher abhängig sein. Sie können auch in unterschiedlichen Abschnitten eines Leitungssystems unterschiedlich sein. Falls eine Leckage vorhanden ist, so tritt Wasser aus dem Leitungssystem aus und der Druck im Innern nimmt ab. Um eine Druckabfallrate zu ermitteln, wird der in der Verteilleitung vorherrschende Druck über eine vorbestimmte Dauer aufgezeichnet. Beispielsweise kann die Ermittlung über eine Dauer von mehr als 5 Minuten erfolgen, beispielsweise 5 bis 15 Minuten, beispielsweise 10 Minuten. Der zu ermittelnde Druck kann in einem Bereich von 0 bis 10 bar liegen, beispielsweise 0.1 bis 8 bar, beispielsweise 0.2 bis 6 bar, beispielsweise 0.3 bis 3 bar. Beispielsweise stehen Trinkwasserleitungen unter einem Druck von 3 bar und Druckluftleitungen unter einem Druck von 6 bis 8 bar. Aus der Auswertung der Druckabfallrate vor dem Schliessen des mindestens einen zweiten Ventils und nach dem Schliessen des mindestens einen zweiten Ventils kann ermittelt werden, ob sich die Leckage in der Fliessrichtung vor oder nach dem zweiten Ventil befindet.

In einer Ausführungsform erfolgt die Ermittlung des Bereichs derart, dass sich die Leckage nach dem mindestens einen zweiten Ventil befindet, wenn die erste Druckabfallrate grösser als null ist und die zweite Druckabfallrate null ist, und wobei sich die Leckage vor dem mindestens einen zweiten Ventil befindet, wenn die erste Druckabfallrate und die zweite Druckabfallrate grösser als null sind. Dies gilt für ein zweites Ventil, jedoch auch für eine beliebige Anzahl von zweiten Ventilen.

In einer Ausführungsform, in welcher im Leitungssystem zwei oder mehr Verbraucher und zwei oder mehr zweite Ventile vorgesehen sind, wobei zwischen dem Drucksensor und jedem Verbraucher mindestens ein zweites Ventil vorgesehen ist, umfasst das Verfahren die Schritte:
f) Schliessen eines weiteren der zweiten Ventile nach dem Ermitteln der zweiten Druckabfallrate;
g) Ermitteln einer dritten Druckabfallrate vor dem Ermitteln des Bereiches der Leckage.

Beispielsweise umfasst das Leitungssystem eine Verteilleitung, welche als Steigleitung in einem Gebäude ausgebildet ist und mehrere Etagen mit Leitungswasser versorgt. In jeder Etage ist ein zweites Ventil vorgesehen. An jedes der zweiten Ventile ist eine Verbraucherleitung angeschlossen, welche mit einem oder mehreren Verbrauchern verbunden ist. Somit kann mit einem solchen Verfahren ermittelt werden, ob sich die Leckage auf einer der Etagen befindet oder ob sich die Leckage in der Steigleitung befindet.

In einer Ausführungsform erfolgt die Ermittlung des Bereichs derart, dass sich die Leckage nach dem weiteren zweiten Ventil befindet, wenn die zuvor ermittelten Druckabfallraten grösser als null sind und die dritte Druckabfallrate null ist, und wobei sich die Leckage vor dem weiteren zweiten Ventil befindet, wenn alle bis dahin ermittelten Druckabfallraten grösser als null sind. Ergibt sich beispielsweise, dass nach dem Schliessen des zweiten Ventils der ersten Etage die Druckabfallrate null ist, so muss sich die Leckage in der Fliessrichtung nach dem zweiten Ventil der ersten Etage befinden.

In einer Ausführungsform wird das Verfahren abgebrochen, wenn die ermittelte erste Druckabfallrate null ist. Wenn die erste Druckabfallrate null ist, kann keine Leckage vorhanden sein und somit kann auf die Ausführung der nachfolgenden Verfahrensschritte verzichtet werden.

Die beanspruchte Erfindung umfasst das Öffnen und erneutes Schliessen entweder des ersten oder des zweiten zuvor geschlossenen Ventils, wenn die entsprechende ermittelte erste oder zweite Druckabfallrate einen vorbestimmten Wert überschreitet und erneutes Ermitteln der entsprechenden ersten oder zweiten Druckabfallrate.

Grosse Druckabfallraten deuten auf eine gewollte Wasserentnahme hin. Druckabfallraten von beispielsweise mehr als 1 bar während der Ermittlungsdauer deuten auf eine Wasserentnahme hin. Auch bei den grossen Druckabfallraten, welche über dem zweiten Schwellenwert liegen, gibt es Unterschiede. Beispielsweise hat ein Händewaschen eine geringere Druckabfallrate zur Folge als beispielsweise ein Duschen. Das Verfahren kann beim Überschreiten des zweiten Schwellenwerts abgebrochen werden, um zu vermeiden, dass den Benutzern des Systems kein Wasser zur Verfügung steht.

Die Druckabfallraten können für unterschiedlich ausgebildete Systeme unterschiedlich sein. Die Druckabfallraten in unterschiedlichen Bereichen eines Systems können ebenfalls unterschiedlich sein. Beispielsweise kann die Druckabfallrate vom im System vorhandenen Wasservolumen abhängig sein. Dementsprechend können auch der erste und der zweite Schwellenwert vom im System umfassten Wasservolumen abhängig sein. Die Schwellenwerte lassen sich demnach aufgrund des Wasservolumens im System bestimmen. Alternativ können die Schwellenwerte durch Referenzmessungen anschliessend an die Installation bestimmt werden. Aufgrund der Referenzmessungen, d.h. aufgrund des Druckverlaufes über die Zeit, können auch die Zeitspannen, bzw. Dauern ermittelt werden, während denen der Druck zu messen ist, um aussagekräftige Messwerte zu erhalten, mit welchen eine Leckage zuverlässig detektierbar ist. Alternativ können die Schwellenwerte iterativ mit einem lernenden System bestimmt werden. Beispielsweise kann eine erste Bestimmung einer Druckabfallrate während einer grossen Dauer erfolgen. Aufgrund dieser Druckabfallrate kann anschliessend die Länge der Dauer verkürzt oder verlängert werden. Die Länge der Dauer kann für alle Abschnitte des Leitungssystems gleich sein oder die Dauern können unterschiedlich lang sein. Aufgrund einer anfänglichen Referenzmessung im gesamten System, bzw. in den einzelnen Abschnitten des Systems, können die Dauern festgelegt werden.

In einer Ausführungsform bleibt das entsprechende Ventil, vor dem erneuten Schliessen, während einer vorbestimmten Zeit geöffnet. Somit kann sichergestellt werden, dass keine Einflüsse der gewollten Wasserentnahme auf die Druckverhältnisse im Leitungssystem zurückbleiben.

In einer Ausführungsform wird im Leitungssystem ein Durchflusssensor bereitgestellt und die vorbestimmte Zeit, während welcher das entsprechende Ventil geöffnet bleibt, wird aufgrund des zuvor ermittelten Durchflusses festgelegt. Mit einem Durchflussmesser lassen sich insbesondere gewollte Wasserentnahmen feststellen, da grössere Wassermengen im Leitungssystem fliessen, welche mit dem Durchflussmesser ermittelbar sind. Wird beispielsweise festgestellt, dass viel Wasser über einen längeren Zeitraum entnommen wird, so wird das entsprechende Ventil danach länger offengelassen. Bei der Feststellung einer geringen Wasserentnahme wird das Ventil kürzer offengelassen. Beispielsweise braucht ein Händewaschen weniger Wasser und dauert weniger lang als beispielsweise ein Duschen. Alternativ kann die Zeit, während der ein Ventil geöffnet bleibt, aufgrund der zuvor ermittelten Druckabfallrate festgelegt werden, da eine hohe Druckabfallrate auf eine grosse Wasserentnahme hindeutet und eine tiefe Druckabfallrate auf eine geringe Wasserentnahme. Bei einer höheren Druckabfallrate kann das entsprechende Ventil danach länger offengelassen werden.

In einer Ausführungsform erfolgt die Ausführung des Verfahrens in einem vorgegebenen Zeitraum. Es ist sinnvoll, das Verfahren in einem Zeitraum auszuführen, in welchem keine bewussten Wasserentnahmen zu erwarten sind. Beispielsweise in der Nacht, wenn sicher weniger oder keine Wasserentnahmen zu erwarten sind. Beispielsweise können solche Zeiträume mit einer statistischen Auswertung der Messwerte des Durchflusssensors ermittelt werden. Somit kann vermieden werden, dass das Verfahren dann durchgeführt wird, wenn üblicherweise dem System Wasser entnommen wird.

In einer Ausführungsform erfolgt die Ausführung des Verfahrens in vorgegebenen Intervallen. Die Intervalle können gleichmässig oder ungleichmässig verteilt sein, d.h. die Abstände zwischen den Ausführungen des Verfahrens können gleichlang oder unterschiedlich lang sein.

Jeder Verbraucher kann mindestens eine Entnahmestelle umfassen, welche an eine Verbraucherleitung angeschlossen ist, wobei die Verbraucherleitung durch das zweite Ventil verschliessbar ist und dadurch von der Verteilleitung trennbar ist. An jeder Verbraucherleitung können demnach eine, zwei oder mehr Entnahmestellen vorgesehen sein.

In einer Ausführungsform ist vor jeder Entnahmestelle ein zweites Ventil angeordnet und in jeder Verbraucherleitung wird das jeweils zuletzt angeordnete zweite Ventil zuerst geschlossen und anschliessend das in der Richtung des Drucksensors anschliessende zweite Ventil. Wenn beispielsweise das letzte zweite Ventil eines Verbrauchers geschlossen wird und die anschliessend ermittelte Druckabfallrate null ist, so muss sich die Leckage in der Fliessrichtung nach dem letzten zweiten Ventil befinden, d.h. im Bereich der letzten Entnahmestelle.

In einer Ausführungsform sind in der Verteilleitung zwischen dem mindestens einen Verbraucher und dem Drucksensor mehrere zweite Ventile vorgesehen und wobei in der Verteilleitung, das jeweils zuletzt angeordnete zweite Ventil zuerst geschlossen wird und anschliessend das in der Richtung des Drucksensors anschliessende zweite Ventil geschlossen wird. Somit kann die Verteilleitung in Segmente unterteilt werden, was die Allokation der Leckage vereinfacht. Es können beispielsweise kritische Stellen bewusst von zwei zweiten Ventilen flankiert werden, um diesen Bereich gesondert analysieren zu können. Kritische Stellen können schwer zugängliche Stellen sein oder es können Stellen sein, bei denen mit Leckagen vermehrt zu rechnen sind. Auch bei langen Leitungen können Ventile in vorbestimmten Abständen zueinander vorgesehen werden, um den Ort einer detektierten Leckage genauer ermitteln zu können.

Ein alternatives Verfahren zum Detektieren einer Leckage in einem Leitungssystem weist die Merkmale des Anspruchs 13 auf.

Gleich wie beim zuvor beschriebenen Verfahren, werden die Leitungen, bzw. die Bereiche des Systems abschnittweise untersucht, d.h. die Druckabfallraten der einzelnen Bereiche werden nacheinander ermittelt. Im Unterschied zum zuvor beschriebenen Verfahren, werden hier zuerst alle Ventile geschlossen und anschliessend wird das an das erste Ventil anschliessende zweite Ventil geöffnet und anschliessend das an dieses anschliessende zweite Ventil. In einer Ausführungsform befindet sich die Leckage vor dem mindestens einen zweiten Ventil, wenn die erste Druckabfallrate grösser als ein erster Schwellenwert ist, und die Leckage befindet sich nach dem mindestens einen zweiten Ventil, wenn die erste Druckabfallrate kleiner als der erste Schwellenwert ist und die zweite Druckabfallrate grösser als der erste Schwellenwert ist.

Bei diesem Verfahren erfolgt die Ermittlung der Druckabfallraten der einzelnen Abschnitte, verglichen mit dem ersten Verfahren, in der umgekehrten Reihenfolge.

Die Verfahren können bei jeder Art von Leitungssystem verwendet werden, in welchem eine Fluid, d.h. eine Flüssigkeit oder ein Gas gefördert wird.

Die erwähnten Ausführungsformen der beiden alternativen Verfahren lassen sich in beliebiger Kombination einsetzen, sofern sie sich nicht widersprechen.

Ein erfindungsgemässes Steuersystem gemäß Anspruch 15 zum Detektieren einer Leckage in einem Leitungssystem mit einer Verteilleitung, deren erstes Ende mit einem ersten Ventil verschliessbar ist und an deren zweitem Ende mindestens ein Verbraucher angeordnet ist, mit einem Drucksensor, mit welchem der Druck in der Verteilleitung ermittelbar ist und mit mindestens einem zweiten Ventil, wobei zwischen dem Drucksensor und jedem Verbraucher mindestens ein zweites Ventil angeordnet ist, wobei das erste Ventil, das mindestens eine zweite Ventil und der Drucksensor mit einer Steuerung verbunden sind, wobei die Steuerung zur Ausführung des Verfahrens nach einem der vorangehenden Ansprüche ausgestaltet ist.

In einer Ausführungsform ist die Verbindung zwischen dem ersten Ventil, dem mindestens einen zweiten Ventil, dem Drucksensor und der Steuerung leitungsgebunden oder drahtlos. Eine Kombination von leitungsgebundenen und drahtlosen Verbindungen ist ebenfalls möglich. Beispielsweise lassen sich Leitungssysteme einfach mit zweiten Ventilen nachrüsten, welche drahtlos mit der Steuerung verbunden werden können. Somit kann der Nachrüstaufwand klein gehalten werden. Die drahtlose Variante eignet sich im Bereich der Verbraucher, da das Nachrüsten von Sensorleitungen meist schwierig ist. Im Bereich der Verteilleitung können leitungsgebundene Ventile eingesetzt werden, da dort die Kabelführung meist durch die Gebäudestruktur nicht behindert ist.

In einer Ausführungsform umfasst das Steuersystem eine Anzeigeeinheit, mit welcher der Bereich der Leckage anzeigbar ist. Somit kann ein Benutzer einfach und schnell den Ort einer Leckage in Erfahrung bringen, wodurch grössere Wasserschäden vermeidbar sind. Die Anzeigeeinheit kann ein Bildschirm sein.

In einer Ausführungsform umfasst das Steuersystem eine Übertragungseinheit, mit welcher Informationen vom Steuersystem weg oder zum Steuersystem hin übertragbar sind. Dies erlaubt eine Fernwartung des Systems, wodurch eine Wartung vor Ort nicht zwingend ist. In diesem Fall kann die Anzeigeeinheit auch ein entfernter Bildschirm sein, beispielsweise eines Computers oder eines Smartphones.

Die erwähnten Ausführungsformen des Steuersystems lassen sich in beliebiger Kombination einsetzen, sofern sie sich nicht widersprechen.

Eine erfindungsgemässe Ventil-Einheit zum Detektieren einer Leckage in einem Leitungssystem umfasst ein erstes Ventil und ein Steuersystem gemäss einer der vorangehenden Ausführungsformen.

In einer Ausführungsform umfasst die Ventil-Einheit einen Drucksensor oder einen Drucksensor und einen Durchflusssensor.

### KURZE BESCHREIBUNG DER FIGUREN

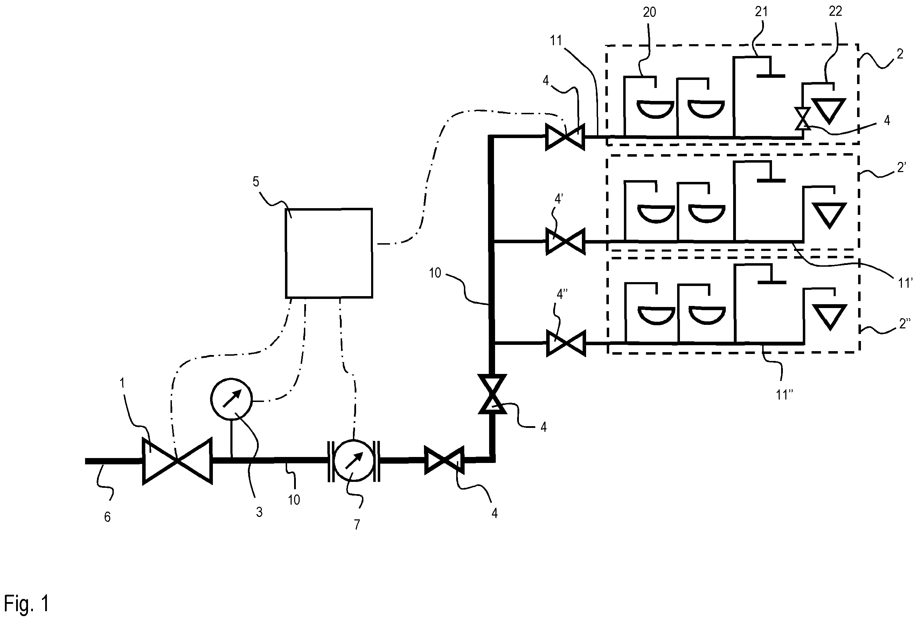

Ausführungsbeispiele der vorliegenden Erfindung werden nachstehend anhand einer Figur noch näher erläutert. Diese dient lediglich zur Erläuterung und ist nicht einschränkend auszulegen. Es zeigt
Fig. 1 eine schematische Darstellung eines Leitungssystems.

### DETAILLIERTE BESCHREIBUNG DER ERFINDUNG

Die Figur 1 zeigt eine schematische Darstellung eines Leitungssystems. Das Leitungssystem umfasst eine Verteilleitung 10, deren erstes Ende mit einem ersten Ventil 1 verschliessbar ist und an deren zweitem Ende mindestens ein Verbraucher 2,2' angeordnet ist. In der Verteilleitung 10, benachbart zum ersten Ventil 1 ist ein Drucksensor 3 angeordnet, mit welchem der Druck der Flüssigkeit in der Verteilleitung 10 ermittelbar ist. Das Leitungssystem umfasst mehrere zweite Ventile 4,4', welche jeweils zwischen dem Drucksensor 3 und einem der Verbraucher 2,2' angeordnet sind. Die Verteilleitung 10 ist durch das erste Ventil 1 von einer Zufuhrleitung (6) trennbar. Ein Durchflusssensor 7, mit welchem der Durchfluss der Flüssigkeit in der Verteilleitung 10 ermittelbar ist, ist benachbart zum ersten Ventil 1 in der Verteilleitung 10 angeordnet. In dieser Darstellung entspricht die Verteilleitung 10 einem Steigstrang in einem Gebäude, welcher die einzelnen Etagen mit Fluid versorgt, beispielsweise mit Wasser. Jeder Verbraucher 2,2' umfasst mehrere Entnahmestellen 20,21,22, welche durch eine Verbraucherleitung 11 miteinander verbunden sind. Die Verbraucherleitung 11 ist durch das zweite Ventil 4 von der Verteilleitung 10 trennbar. Entnahmestellen sind beispielsweise Waschbecken 20, Duschen 21 oder Toiletten 22. Im Verbraucher 2 der obersten Etage ist vor der Toilette 22 ein weiteres zweites Ventil 4 angeordnet. Somit kann separat überprüft werden, ob sich die Leckage im Bereich der Toilette befindet. Selbstverständlich können die Anderen Entnahmestellen ebenfalls mit einem eigenen zweiten Ventil versehen werden. Ein kritischer Bereich der Verteilleitung 10, nämlich deren Umlenkbereich, kann separat durch zwei dazu flankierend angeordnete zweite Ventile 4 auf eine Leckage untersucht werden. Alle Ventile und Sensoren sind mit der Steuerung 5 verbunden, auch wenn dies aus Gründen der Übersicht nicht bei allen so dargestellt ist.

Alternativ können die Verbraucher 2,2', nicht wie in der Figur 1 dargestellt, in Serie hintereinander angeordnet sein. In diesem Fall erstreckt sich die Verbraucherleitung 11 über mehrere Etagen. Vom Prinzip her entspricht dies einem Verbraucher, welcher mehrere hintereinandergeschaltete Entnahmestellen umfasst, welche auf unterschiedlichen Etagen angeordnet sind.

Soll nun dieses Leitungssystem auf eine Leckage überprüft werden, so wird erst ein Zeitraum ermittelt, in welchem üblicherweise keine Wasserentnahme durch einen Benutzer erfolgt. Beispielsweise in einem Wohnhaus zwischen zwei Uhr und drei Uhr nachts. In diesem Zeitraum wird dann das erste Ventil 1 geschlossen, wodurch in den Flüssigkeitsleitungen des Systems ein geschlossener Druckraum gebildet wird. Anschliessend wird der Druck in der Verteilleitung über eine Zeitdauer von beispielsweise 10 Minuten gemessen. Wird kein Druckabfall in dieser Zeit gemessen, so ist die Druckabfallrate null und das Verfahren wird abgebrochen. Ist die Druckabfallrate zu gross, so wird von einer Wasserentnahme ausgegangen und das Verfahren wird abgebrochen. Liegt die Druckabfallrate in einem plausiblen Bereich, so wird das im Leitungssystem in der Fliessrichtung zu hinterst liegende zweite Ventil zuerst geschlossen. In dargestellten Fall das zweite Ventil (4) der letzten Entnahmestelle (22) im Verbraucher (2) der obersten Etage. Ist die ermittelte Druckabfallrate nach dem Schliessen dieses Ventils null, so muss sich die Leckage bei der letzten Entnahmestelle (22) befinden. Ist die Druckabfallrate im Wesentlichen gleichgross, so ist die Leckage im Leitungssystem vor diesem Ventil. Anschliessend wird das zweite Ventil (4) vor dem Verbraucher (2) der obersten Etage geschlossen. Ist die danach ermittelte Druckabfallrate null, so befindet sich die Leckage in diesem Verbraucher, vor der letzten Entnahmestelle (22). Ist die Druckabfallrate nicht null, so muss die Leckage in der Verteilleitung (10) oder im Verbraucher (2',2'') einer der beiden anderen Etagen sein. Durch die Schliessung der zweiten Ventile (4',4") kann analog ermittelt werden, ob sich die Leckage im jeweiligen Verbraucher (2',2'') oder in der Verteilleitung (10) befinden muss. Wird ermittelt, dass sich die Leckage in der Verteilleitung (10) befinden muss, so kann durch die Schiessung der zweiten Ventile (4), in der Fliessrichtung nach und vor dem Umlenkbereich, festgestellt werden, ob sich die Leckage im Bereich der Steigleitung, im Umlenkbereich oder im Bereich zwischen dem Umlenkbereich und dem ersten Ventil (1) befinden muss.

Mit dem Durchflusssensor (7) kann die Wassermenge bestimmt werden, welche bei einer Entnahme geflossen ist. Zudem kann auf eine Durchführung des Verfahrens zum Detektieren einer Leckage verzichtet werden, wenn der Durchflusssensor (7) anzeigt, dass derzeit eine Entnahme stattfindet. Nach der Ermittlung aller Durchflussraten, wird das Resultat, d.h. der Ort der Leckage, an einer Anzeigeeinheit des Steuersystems angezeigt. Die Anzeigeeinheit kann vor Ort sein oder kann drahtlos mit der Steuerung (5) der Steuereinheit verbunden sein.

### BEZUGSZEICHENLISTE

| | | | |
|---|---|---|---|
| 1 | erstes Ventil | 4 | zweites Ventil |
| 10 | Verteilleitung | 5 | Steuerung |
| 11 | Verbraucherleitung | 6 | Zufuhrleitung |
| 2 | Verbraucher | 7 | Durchflusssensor |
| 20 | Waschtisch | | |
| 21 | Dusche | PR1,2,3 | Druckabfallrate |
| 22 | WC | SW1,2 | Schwellenwert |
| 3 | Drucksensor | | |

## Patentansprüche

1. Ein Verfahren zum Detektieren einer Leckage in einem Leitungssystem mit einer Verteilleitung (10), deren erstes Ende mit einem ersten Ventil (1) verschliessbar ist und an deren zweitem Ende mindestens ein verschliessbarer Verbraucher (2,2') angeordnet ist, mit einem Drucksensor (3), mit welchem der Druck in der Verteilleitung (10) ermittelbar ist und mit mindestens einem zweiten Ventil (4,4'), welches zwischen dem einen Drucksensor (3) und mindestens einem der verschliessbaren Verbraucher (2,2') angeordnet ist, umfassend die Schritte:
a) Schliessen des ersten Ventils (1);
b) Ermitteln einer ersten Druckabfallrate (PR1) mit dem einen Drucksensor (3);
c) Schliessen des mindestens einen zweiten Ventils (4,4');
d) Ermitteln einer zweiten Druckabfallrate (PR2) mit dem einen Drucksensor (3);
e) Öffnen und erneutes Schliessen entweder des zuvor geschlossenen ersten Ventils (1) oder des mindestens einen zweiten Ventils (4,4'), wenn die ermittelte erste oder zweite Druckabfallrate (PR1,PR2) einen vorbestimmten Wert überschreitet und erneutes Ermitteln der entsprechenden ersten oder zweiten Druckabfallraten (PR1,PR2);
f) Ermitteln des Bereiches der Leckage aufgrund der ermittelten Druckabfallraten (PR1,PR2).

2. Das Verfahren gemäss Anspruch 1, wobei sich die Leckage nach dem mindestens einen zweiten Ventil (4,4') befindet, wenn die erste Druckabfallrate (PR1) grösser als ein erster Schwellenwert (SW1) ist und die zweite Druckabfallrate (PR2) kleiner als ein zweiter Schwellenwert (SW2) ist, und wobei sich die Leckage vor dem mindestens einen zweiten Ventil (4,4') befindet, wenn die erste Druckabfallrate (PR1) und die zweite Druckabfallrate (PR2) grösser als der erste Schwellenwert (SW1) sind.

3. Das Verfahren gemäss Anspruch 1 oder 2, wobei im Leitungssystem zwei oder mehr verschliessbare Verbraucher (2,2') und zwei oder mehr zweite Ventile (4,4') vorgesehen sind, wobei zwischen dem einen Drucksensor (3) und jedem verschliessbaren Verbraucher (2,2') mindestens ein zweites Ventil (4,4') vorgesehen ist, umfassend die Schritte:
g) Schliessen eines weiteren der zweiten Ventile (4') nach dem Ermitteln der zweiten Druckabfallrate (PR2);
h) Ermitteln einer dritten Druckabfallrate (PR3) vor dem Ermitteln des Bereiches der Leckage.

4. Das Verfahren gemäss Ansprüchen 2 und 3, wobei sich die Leckage nach dem weiteren zweiten Ventil (4') befindet, wenn die zuvor ermittelten Druckabfallraten (PR1,PR2) grösser als der erste Schwellenwert (SW1) sind und die dritte Druckabfallrate (PR3) kleiner als der zweite Schwellenwert (SW2) ist, und wobei sich die Leckage vor dem weiteren zweiten Ventil (4') befindet, wenn alle bis dahin ermittelten Druckabfallraten (PR1,PR2,PR3) grösser als der erste Schwellenwert (SW1) sind.

5. Das Verfahren gemäss einem der Ansprüche 2 oder Me- 4, wobei das Verfahren abgebrochen wird, wenn die ermittelte erste Druckabfallrate (PR1) kleiner als der zweite Schwellenwert (SW2) ist.

6. Das Verfahren gemäss einem der Ansprüche 3 bis 5, wobei das zuvor geschlossene Ventil (1,4,4') wieder geöffnet und erneut geschlossen wird, wenn die ermittelte dritte Druckabfallrate (PR3) einen vorbestimmten Wert überschreitet.

7. Das Verfahren gemäss Anspruch 6, wobei vor dem erneuten Schliessen, das entsprechende Ventil (1,4,4') während einer vorbestimmten Zeit geöffnet bleibt.

8. Das Verfahren gemäss Anspruch 7, wobei im Leitungssystem ein Durchflusssensor bereitgestellt wird und wobei die vorbestimmte Zeit aufgrund des zuvor ermittelten Durchflusses festgelegt wird.

9. Das Verfahren gemäss einem der vorangehenden Ansprüche, wobei die Ausführung des Verfahrens in einem vorgegebenen Zeitraum erfolgt.

10. Das Verfahren gemäss einem der vorangehenden Ansprüche, wobei die Ausführung des Verfahrens in vorgegebenen Intervallen erfolgt.

11. Das Verfahren gemäss einem der vorangehenden Ansprüche, wobei jeder verschliessbare Verbraucher (2,2') mehrere Entnahmestellen (20,21,22) umfasst und vor jeder Entnahmestelle (20,21,22) ein zweites Ventil (4) angeordnet ist und wobei in jeder Verbraucherleitung (11) das jeweils zuletzt angeordnete zweite Ventil (4,4') zuerst geschlossen wird und anschliessend das in der Richtung des einen Drucksensors (3) anschliessende zweite Ventil (4,4') geschlossen wird.

12. Das Verfahren gemäss einem der vorangehenden Ansprüche, wobei in der Verteilleitung (10) zwischen dem mindestens einen verschliessbaren Verbraucher (2,2') und dem einen Drucksensor (3) mehrere zweite Ventile (4) vorgesehen sind und wobei in der Verteilleitung (10), das jeweils zuletzt angeordnete zweite Ventil (4) zuerst geschlossen wird und anschliessend das in der Richtung des einen Drucksensors (3) anschliessende zweite Ventil (4) geschlossen wird.

13. Ein Verfahren zum Detektieren einer Leckage in einem Leitungssystem mit einer Verteilleitung (10), deren erstes Ende mit einem ersten Ventil (1) verschliessbar ist und an deren zweitem Ende mindestens ein verschliessbarer Verbraucher (2,2') angeordnet ist, mit einem Drucksensor (3), mit welchem der Druck in der Verteilleitung (10) ermittelbar ist und mit mindestens einem zweiten Ventil (4,4'), welches zwischen dem einen Drucksensor (3) und mindestens einem der verschliessbaren Verbraucher (2,2') angeordnet ist, umfassend die Schritte:
a) Schliessen aller Ventile (1,4,4');
b) Ermitteln einer ersten Druckabfallrate (PR1) mit dem einen Drucksensor (3);
c) Öffnen des mindestens einen zweiten Ventils (4,4');
d) Ermitteln einer zweiten Druckabfallrate (PR2) mit dem einen Drucksensor (3);
e) Öffnen und erneutes Schliessen entweder des ersten oder des zweiten zuvor geschlossenen Ventils (1,4,4'), wenn die entsprechende ermittelte erste oder zweite Druckabfallrate (PR1, PR2) einen vorbestimmten Wert überschreitet und erneutes Ermitteln der entsprechenden ersten oder zweiten Druckabfallrate (PR1,PR2);
f) Ermitteln des Bereiches der Leckage aufgrund der ermittelten Druckabfallraten (PR1,PR2).

14. Das Verfahren gemäss Anspruch 13, wobei sich die Leckage vor dem mindestens einen zweiten Ventil (4,4') befindet, wenn die erste Druckabfallrate (PR1) grösser als ein erster Schwellenwert (SW1) ist, und wobei sich die Leckage nach dem mindestens einen zweiten Ventil (4,4') befindet, wenn die erste Druckabfallrate (PR1) kleiner als der erste Schwellenwert (SW1) ist und die zweite Druckabfallrate (PR2) grösser als der erste Schwellenwert (SW1) ist.

15. Ein Steuersystem zum Detektieren einer Leckage in einem Leitungssystem mit einer Verteilleitung (10), deren erstes Ende mit einem ersten Ventil (1) verschliessbar ist und an deren zweitem Ende mindestens ein Verbraucher (2,2') angeordnet ist, mit einem Drucksensor (3), mit welchem der Druck in der Verteilleitung (10) ermittelbar ist und mit mindestens einem zweiten Ventil (4,4'), wobei zwischen dem einen Drucksensor (3) und jedem Verbraucher (2,2') mindestens ein zweites Ventil (4,4') angeordnet ist, wobei das erste Ventil (1), das mindestens eine zweite Ventil (4,4') und der eine Drucksensor (3) mit einer Steuerung (5) verbunden sind, wobei die Steuerung (5) zur Ausführung des Verfahrens nach einem der vorangehenden Ansprüche ausgestaltet ist.

## Claims

1. A method for detecting a leak in a line system having a distribution line (10), the first end of which can be closed with a first valve (1) and at the second end of which at least one closable consumer (2,2') is arranged, having one pressure sensor (3), with which the pressure in the distribution line (10) can be determined, and having at least one second valve (4,4'), that is arranged between the one pressure sensor (3) and at least one of the closable consumers (2,2'), comprising the steps of:
a) closing the first valve (1);
b) determining a first pressure reduction rate (PR1) with the one pressure sensor (3);
c) closing the at least one second valve (4,4');
d) determining a second pressure reduction rate (PR2) with the one pressure sensor (3);
e) opening and again closing of either the previously closed first valve (1) or of the at least one second valve (4,4'), when the determined first or second pressure reduction rate (PR1,PR2) exceeds a predetermined value and again determining the corresponding first or second pressure reduction rate (PR1,PR2);
f) determining the region of the leak based on the determined pressure reduction rates (PR1,PR2).

2. The method according to claim 1, wherein the leak is located downstream of the at least one second valve (4,4') when the first pressure reduction rate (PR1) is greater than a first threshold value (SW1) and the second pressure reduction rate (PR2) is less than a second threshold value (SW2), and wherein the leak is located upstream of the at least one second valve (4,4') when the first pressure reduction rate (PR1) and the second pressure reduction rate (PR2) are greater than the first threshold value (SW1).

3. The method according to claim 1 or 2, wherein two or more closable consumers (2,2') and two or more second valves (4,4') are provided in the line system, wherein at least one second valve (4,4') is provided between the one pressure sensor (3) and each closable consumer (2,2'), comprising the steps of:
g) closing another one of the second valves (4') after determining the second pressure reduction rate (PR2);
h) determining a third pressure reduction rate (PR3) before determining the region of the leak.

4. The method according to claims 2 and 3, wherein the leak is located downstream of the further second valve (4') when the previously determined pressure reduction rates (PR1,PR2) are greater than the first threshold value (SW1) and the third pressure reduction rate (PR3) is less than the second threshold value (SW2), and wherein the leak is located before the further second valve (4') when all pressure reduction rates (PR1,PR2,PR3) determined up to that point are greater than the first threshold value (SW1) .

5. The method according to one of claims 2 or 4, wherein the method is stopped when the determined first pressure reduction rate (PR1) is less than the second threshold value (SW2).

6. The method according to one of claims 3 to 5, wherein the previously closed valve (1,4,4') is reopened and closed again when the determined third pressure reduction rate (PR3) exceeds a predetermined value.

7. The method according to claim 6, wherein before re-closing, the corresponding valve (1,4,4') remains open for a predetermined time.

8. The method according to claim 7, wherein a flow sensor is provided in the line system, and wherein the predetermined time is determined based on the previously determined flow.

9. The method according to one of the preceding claims, wherein the execution of the method is carried out in a predetermined period of time.

10. The method according to one of the preceding claims, wherein the execution of the method is performed at predetermined intervals.

11. The method according to one of the preceding claims, wherein each closable consumer (2,2') comprises a plurality of tapping points (20,21,22) and a second valve (4) is arranged upstream of each tapping point (20,21,22) and wherein in each consumer line (11) the respective second valve (4,4') arranged last is closed first and subsequently the second valve (4,4') adjoining in the direction of the one pressure sensor (3) is closed.

12. The method according to one of the preceding claims, wherein a plurality of second valves (4) are provided in the distribution line (10) between the at least one closable consumer (2,2') and the one pressure sensor (3), and wherein in the distribution line (10), the second valve (4) arranged last in each case is closed first and subsequently the second valve (4) adjoining in the direction of the one pressure sensor (3) is closed.

13. A method for detecting a leak in a line system having a distribution line (10), the first end of which can be closed with a first valve (1) and at the second end of which at least one closable consumer (2,2') is arranged, having a pressure sensor (3), with which the pressure in the distribution line (10) can be determined, and having at least one second valve (4,4'), that is arranged between the one pressure sensor (3) and at least one of the closable consumers (2,2'), comprising the steps of:
a) closing all valves (1,4,4');
b) determining a first pressure reduction rate (PR1) with the one pressure sensor (3);
c) opening the at least one second valve (4,4');
d) determining a second pressure reduction rate (PR2) with the one pressure sensor (3);
e) opening and again closing of either the previously closed first valve (1) or of the at least one second valve (4,4'), when the determined first or second pressure reduction rate (PR1,PR2) exceeds a predetermined value and again determining the corresponding first or second pressure reduction rate (PR1,PR2);
f) determining the region of the leak based on the determined pressure reduction rates (PR1, PR2).

14. The method according to claim 13, wherein the leak is located upstream of the at least one second valve (4,4') when the first pressure reduction rate (PR1) is greater than a first threshold value (SW1), and wherein the leak is located downstream of the at least one second valve (4,4') when the first pressure reduction rate (PR1) is less than the first threshold value (SW1) and the second pressure reduction rate (PR2) is greater than the first threshold value (SW1).

15. A control system for detecting a leak in a line system having a distribution line (10), the first end of which can be closed with a first valve (1) and at the second end of which at least one consumer (2,2') is arranged, having one pressure sensor (3), with which the pressure in the distribution line (10) can be determined, and having at least one second valve (4,4'), wherein at least one second valve (4,4') is arranged between the one pressure sensor (3) and each consumer (2,2'), wherein the first valve (1), the at least one second valve (4,4') and the pressure sensor (3) are connected to a controller (5), wherein the controller (5) is designed to carry out the method according to one of the preceding claims.

## Revendications

1. Un procédé de détection d'une fuite dans un système de ligne comportant une ligne de distribution (10), dont la première extrémité peut être fermée par une première vanne (1) et à la deuxième extrémité de laquelle est placé au moins un consommateur fermable (2,2'), comportant un capteur de pression (3) permettant de déterminer la pression dans la ligne de distribution (10), et comportant au moins une deuxième vanne (4,4') placée entre l'un capteur de pression (3) et au moins un des consommateurs fermables (2,2'), comprenant les étapes consistant à :
a) fermer la première vanne (1) ;
b) déterminer un premier taux de réduction de pression (PR1) à l'aide de l'un capteur de pression (3) ;
c) fermer au moins une deuxième vanne (4,4') ;
d) détermination d'un deuxième taux de réduction de la pression (PR2) à l'aide de l'un capteur de pression (3) ;
e) ouverture et nouvelle fermeture de la première vanne (1) ou de la deuxième vanne (4,4') précédemment fermée, lorsque le premier ou le deuxième taux de réduction de pression déterminé (PR1,PR2) dépasse une valeur prédéterminée et nouvelle détermination du premier ou du deuxième taux de réduction de pression correspondant (PR1,PR2) ;
f) déterminer la région de la fuite sur la base des taux de réduction de pression déterminés (PR1,PR2).

2. Le procédé selon la revendication 1, dans lequel la fuite est située en aval de la au moins une deuxième vanne (4,4') lorsque le premier taux de réduction de pression (PR1) est supérieur à une première valeur seuil (SW1) et que le deuxième taux de réduction de pression (PR2) est inférieur à une deuxième valeur seuil (SW2), et dans lequel la fuite est située en amont de la au moins une deuxième vanne (4,4') lorsque le premier taux de réduction de pression (PR1) et le deuxième taux de réduction de pression (PR2) sont supérieurs à la première valeur seuil (SW1).

3. Le procédé selon la revendication 1 ou 2, dans lequel au moins deux consommateurs fermables (2,2') et au moins deux deuxièmes vannes (4,4') sont prévus dans le système de conduite, dans laquelle au moins une deuxième vanne (4,4') est prévue entre l'un capteur de pression (3) et chaque consommateur fermable (2,2'), comprenant les étapes de :
g) fermer une autre des deuxièmes vannes (4') après avoir déterminé le deuxième taux de réduction de pression (PR2) ;
h) déterminer un troisième taux de réduction de pression (PR3) avant de déterminer la région de la fuite.

4. Le procédé selon les revendications 2 et 3, dans lequel la fuite est localisée en aval de la deuxième vanne supplémentaire (4') lorsque les taux de réduction de pression déterminés précédemment (PR1,PR2) sont supérieurs à la première valeur seuil (SW1) et que le troisième taux de réduction de pression (PR3) est inférieur à la deuxième valeur seuil (SW2), et dans laquelle la fuite est localisée avant la deuxième vanne supplémentaire (4') lorsque tous les taux de réduction de pression (PR1,PR2,PR3) déterminés jusqu'à ce point sont supérieurs à la première valeur seuil (SW1) .

5. Le procédé selon l'une des revendications 2 ou 4, dans lequel le procédé est arrêté lorsque le premier taux de réduction de pression déterminé (PR1) est inférieur à la deuxième valeur seuil (SW2).

6. Le procédé selon l'une des revendications 3 à 5, dans lequel la vanne précédemment fermée (1,4,4') est rouverte et refermée lorsque le troisième taux de réduction de pression déterminé (PR3) dépasse une valeur prédéterminée.

7. Le procédé selon la revendication 6, dans lequel, avant de se refermer, la vanne correspondante (1,4,4') reste ouverte pendant un temps prédéterminé.

8. Le procédé selon la revendication 7, dans lequel un capteur de débit est fourni dans le système de ligne, et dans lequel le temps prédéterminé est déterminé sur la base du débit précédemment déterminé.

9. Le procédé selon l'une des revendications précédentes, dans lequel l'exécution du procédé se fait dans un laps de temps prédéterminé.

10. Le procédé selon l'une des revendications précédentes, dans lequel l'exécution du procédé se fait à des intervalles prédéterminés.

11. Le procédé selon l'une des revendications précédentes, dans lequel chaque consommateur fermable (2,2') comprend une pluralité de points de prélèvement (20,21,22) et une deuxième vanne (4) est disposée en amont de chaque point de prélèvement (20,21,22) et dans lequel, dans chaque ligne de consommation (11), la deuxième vanne respective (4,4') disposée en dernier est fermée en premier et ensuite la deuxième vanne (4,4') adjacente en direction de l'un capteur de pression (3) est fermée.

12. Le procédé selon l'une des revendications précédentes, dans lequel une pluralité de deuxièmes vannes (4) sont prévues dans la ligne de distribution (10) entre au moins un consommateur fermable (2,2') et l'un capteur de pression (3), et dans lequel dans la ligne de distribution (10), la seconde vanne (4) disposée en dernier dans chaque cas est fermée en premier et ensuite la seconde vanne (4) adjacente en direction de l'un capteur de pression (3) est fermée.

13. Procédé de détection d'une fuite dans un système de ligne comportant une ligne de distribution (10), dont la première extrémité peut être fermée par une première vanne (1) et à la deuxième extrémité de laquelle se trouve au moins un consommateur fermable (2,2'), comportant un capteur de pression (3) permettant de déterminer la pression dans la ligne de distribution (10), et comportant au moins une deuxième vanne (4,4'), placée entre l'un capteur de pression (3) et au moins un des consommateurs fermables (2,2'), comprenant les étapes consistant à :
a) fermer toutes les vannes (1,4,4') ;
b) déterminer un premier taux de réduction de pression (PR1) à l'aide de l'un capteur de pression (3) ;
c) ouvrir au moins une deuxième vanne (4,4') ;
d) détermination d'un deuxième taux de réduction de la pression (PR2) à l'aide de l'un capteur de pression (3) ;
e) ouvrir et de nouveau fermer de la première vanne (1) précédemment fermée ou de l'au moins une deuxième vanne (4,4'), lorsque le premier ou le deuxième taux de réduction de pression déterminé (PR1,PR2) dépasse une valeur prédéterminée et de nouveau déterminer du premier ou du deuxième taux de réduction de pression correspondant (PR1,PR2) ;
f) déterminer la région de la fuite sur la base des taux de réduction de pression déterminés (PR1, PR2).

14. Procédé selon la revendication 13, dans lequel la fuite est située en amont de l'au moins une deuxième vanne (4,4') lorsque le premier taux de réduction de pression (PR1) est supérieur à une première valeur seuil (SW1), et dans lequel la fuite est située en aval de l'au moins une deuxième vanne (4,4') lorsque le premier taux de réduction de pression (PR1) est inférieur à la première valeur seuil (SW1) et que le deuxième taux de réduction de pression (PR2) est supérieur à la première valeur seuil (SW1).

15. Un système de contrôle pour la détection d'une fuite dans un système de ligne comportant une ligne de distribution (10), dont la première extrémité peut être fermée par une première vanne (1) et à la deuxième extrémité de laquelle au moins un consommateur (2,2') est disposé, comportant un capteur de pression (3), avec lequel la pression dans la ligne de distribution (10) peut être déterminée, et comportant au moins une deuxième vanne (4,4'), dans laquelle au moins une deuxième vanne (4,4') est disposée entre le un capteur de pression (3) et chaque consommateur (2,2'), dans laquelle la première vanne (1), au moins une deuxième vanne (4,4') et le un capteur de pression (3) sont connectés à un contrôleur (5), dans lequel le contrôleur (5) est conçu pour mettre en œuvre le procédé selon l'une des revendications précédentes.
